# EUROPEAN PATENT APPLICATION

(11) **EP 4 555 864 A1**
(43) Date of publication of application: **21.05.2025**
(21) Application number: 24210858.7
(22) Date of filing: 05.11.2024
(51) Int. Cl.: A22B 5/00, A22C 17/00, A22C 21/00

(54) **KNEECAP HARVESTER AND METHOD FOR REMOVING A KNEECAP**

(30) Priority: 20.11.2023 NL 2036312
(71) Applicant: Meyn Food Processing Technology B.V., 1511 MA Oostzaan (NL)
(72) Inventor: VAN HILLO, Eric Adriaan, Oostzaan (NL)
(74) Representative: van Breda, Jacobus

(57) **Abstract**

A method for removing a kneecap (4) from a thighbone (3) to which kneecap (4) at least a portion of knee meat attaches, wherein a forward end (2) of a chisel (1) engages the thighbone (3) and is subsequently moved between the thighbone (3) and the kneecap (4) so as to detach at least part of the naturally present connections between the thighbone (3) and the kneecap (4), wherein during the execution of the method the thighbone (3) is clamped into a fixed position.

## Description

The invention relates to a method for removing a kneecap from a thighbone to which kneecap at least a portion of kneemeat attaches. The invention further relates to a kneecap harvester.

WO2015/194945 discloses a method and a corresponding system for harvesting kneemeat and thighmeat from a whole leg poultry product. The method comprises the following steps:
- providing a leg product having:
- a thigh,
- a drumstick,
- a knee,
- bringing a knee cap scraper in engagement with the leg product adjacent to the knee cap and a counter element at the rear of the knee cap,
- moving the knee cap past the knee cap scraper while the counter element engages the leg product at the rear of the knee cap, therewith scraping kneemeat from the kneecap while leaving the kneemeat connected to the thigh.

As an option WO2015/194945 discloses:
- severing the scraped kneecap from the drumstick by cutting at a first cutting location which is situated between the kneecap and the drumstick, or
- severing the kneecap from the thigh and the knee meat by cutting at a second cutting location which is situated between the kneecap and the thigh, adjacent to the kneecap scraper, during which severing the knee meat and the thigh remain interconnected.

All embodiments that are explicitly disclosed by WO2015/194945 show how to perform the optional harvesting of the kneecap when the thighbone is already removed from the thigh, whilst the drumstick still attaches to the thigh. There is therefore no clear and unambiguous teaching in WO2015/194945 how to harvester the kneecap when besides the thigh meat, also the thighbone is still present in the thigh, nor does it teach how to harvest the kneecap when the thigh is already completely separated from the drumstick.

EP 2 866 573 B1 and WO 2008/087617 show other methods and devices for removing the kneecap from a poultry leg, although also in EP 2 866 573 B1 the kneecap is removed after removal of the thighbone.

US 3,486,187 discloses with reference to its figures 21 through 24, still another method and means for removing the kneecap or patella from an animal leg. US 3,486,187 shows a patella remover having a blade holder which slidably engages a pointed blade. The blade is positioned adjacent the patella of the animal and is sharpened at the edges so that it can penetrate the flesh adjacent to the patella. An exciser having a sharpened edge is supported for rotation relative to said blade holder. As the exciser rotates relative to the blade holder to remove the patella, the blade retracts within the holder so that the exciser can cut behind the patella and shear off the tendons supporting it between the exciser and the blade holder.

It is an object of the invention to teach how to provide an improved method of how to harvest the kneecap in different circumstances, as well as an improved kneecap harvester.

These and other objectives that may become apparent from the following disclosure are realized with a method and kneecap harvester according to one or more of the appended claims.

According to the method of the invention a forward end of a chisel engages the thighbone and is subsequently moved between the thighbone and the kneecap so as to detach at least part of the naturally present connections between the thighbone and the kneecap, wherein during the execution of the method the thighbone is clamped into a fixed position. This method step can be applied when the drum bone is already completely separated from the thigh, but also when the drum bone still attaches to the thighbone. In the present application the wording drum bone also englobes the possibility that it still contains its drum meat.

Particularly when the drum bone is already separated from the thighbone, it is preferable that the motion of the chisel between the thighbone and the kneecap is followed by moving the chisel with the kneecap away from the thighbone.

It may then further be preferable that at the kneecap facing end of the thighbone a support plate is provided to restrict motion of the thighbone whilst the chisel engages the thighbone.

As the chisel moves with the kneecap away from the thighbone, it is then advantageous that the chisel slides along the support plate.

When the method of the invention is applied while a drum bone still attaches to the thighbone, it is preferable that a gripper fixes the drum bone with the thighbone attached thereto in position.

Particularly when a drum bone still attaches to the thighbone it is preferred that a blade or blades engage the meat in the vicinity of the kneecap so as to release all connections of the kneecap with the thighbone and drum bone.

The method of the invention may preferably be executed with a kneecap harvester that is provided with the feature that the harvester comprises a movable chisel with a forward end arranged to engage a thighbone and to move between the thighbone and the kneecap so as to detach at least part of the naturally present connections between the thighbone and the kneecap, wherein the harvester comprises a clamp or clamps for fixing the thighbone in position before the chisel engages the thighbone. This feature is particularly beneficial when the drum bone has already been removed from the thighbone, although this is not essential.

Suitably the chisel is arranged to move the kneecap away from the thighbone after detaching at least part of the naturally present connections between the thighbone and the kneecap.

It is also preferred that the forward end of the chisel is indented to better adapt to the curvature of the thighbone.

It is then further beneficial that the harvester is provided with a support plate to restrict motion of the thighbone whilst the chisel engages the thighbone.

For operating on a poultry leg comprising a drum bone and thighbone, it is preferable that the harvester comprises a gripper for securing the drum bone which is attached to the thighbone into a fixed position.

Further advantageously the harvester comprises a blade or blades to engage the meat in the vicinity of the kneecap so as to release all connections of the kneecap with the thighbone and/or drum bone.

The accompanying drawing, which is incorporated into and forms a part of the specification, illustrates one or more embodiments of the present invention and, together with the description, serves to explain the principles of the invention. The drawing is only for the purpose of illustrating one or more embodiments of the invention and is not to be construed as limiting the invention.

In the drawing:
- figure 1 shows a first embodiment of an apparatus of the invention in a side view for processing a thighbone that is still connected to the drumstick;
- figure 2 shows the apparatus of figure 1 in a further step of processing the thighbone;
- figure 3 shows the apparatus of figure 1 in still a further processing step;
- figure 4 shows a second embodiment of an apparatus of the invention in a side view for processing a thighbone that is completely separated from the drumstick;
- figure 5 shows the apparatus of figure 4 in a further step of processing the thighbone;
- figure 6 shows the apparatus of figure 4 in still a further processing step; and
- figure 7 shows in detail a front view of a chisel used in the above-mentioned figures.

Whenever in the figures the same reference numerals are applied, these numerals refer to the same parts.

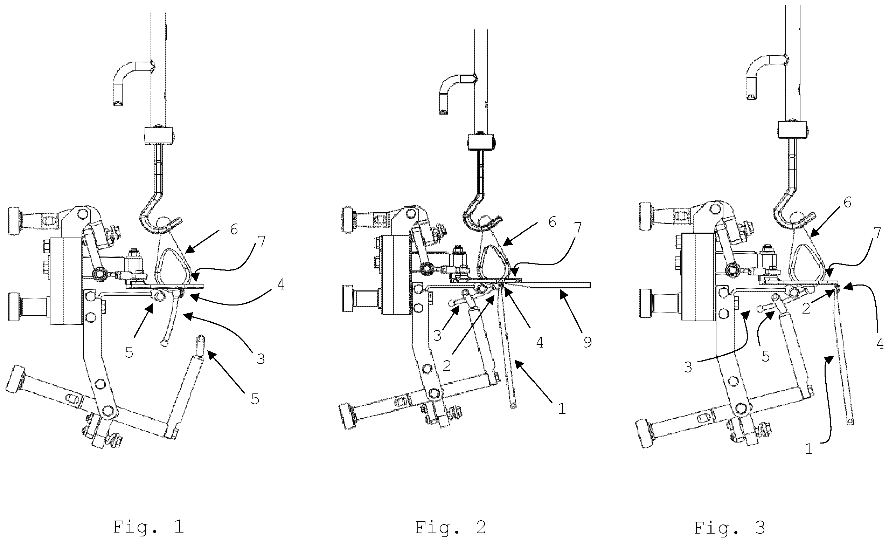

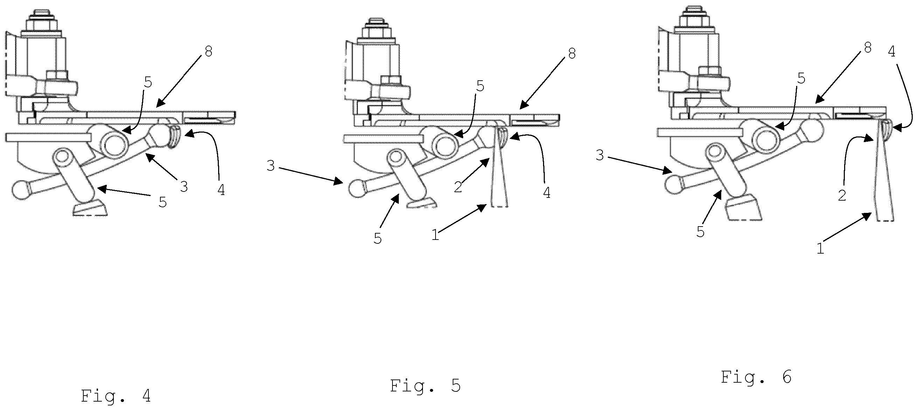

Common to the shown embodiments of the apparatus of the invention as depicted in figure 1 and figure 4, respectively is that a forward beveled end 2 of a chisel 1 engages the thighbone 3. In these embodiments the thighbone 3 is shown without the thigh meat which has already been removed from the thighbone 3.

After the chisel 1 has engaged the thighbone 3 as shown in figures 2 and 5 for the two respectively shown embodiments, the chisel 1 is moved between the thighbone 3 and the kneecap 4 so as to detach at least part of the naturally present connections between the thighbone 3 and the kneecap 4. This applies to both embodiments of figures 1 and 4.

In the first embodiment of figures 1 - 3, a gripper 7 fixes the drumstick 6 with the thighbone 3 attached thereto in position.

Figures 4 - 6 relate to the embodiment wherein the thighbone 3 is completely separated from the drumstick, for example after a blade (not shown) is activated after the thigh bone is grabbed by the gripper 7 as in the embodiment of figure 2. Figures 5 and 6 show that the motion of the chisel 1 between the thighbone 3 and the kneecap 4 is followed by moving the chisel 1 with the kneecap 4 away from the thighbone 3. It further shows that the thighbone 3 is clamped into a fixed position by clamps 5.

Figures 4 - 6 also show that at the kneecap facing end of the thighbone 3 a support plate 8 is provided to restrict motion of the thighbone 3 whilst the chisel 1 engages the thighbone 3. The gripper 7 used in the first embodiment may be used for that.

Further figure 5 and figure 6 show that as the chisel 1 moves with the kneecap 4 away from the thighbone 3, the chisel 1 slides along the support plate 8. This makes removing of the kneecap 4 with the attaching meat a reliable and repeatable operation.

In the embodiment of figures 1 - 3 wherein a drum bone 6 still attaches to the thighbone 3, figure 2 shows that a blade 9 or blades engage the meat in the vicinity of the kneecap 4 so as to release all connections of the kneecap 4 with the thighbone 3 and drum bone 6. It is also possible that the harvester of the second embodiment of figures 4 - 6 comprises a blade or blades 9 to engage the meat in the vicinity of the kneecap 4 so as to release all connections of the kneecap 4 with the thighbone 3 and/or drum bone 6. Also, the beveled forward end may have a cutting edge.

Accordingly the invention is embodied in a kneecap harvester as schematically depicted in the figures, wherein the harvester comprises a movable chisel 1 with a beveled forward end 2 to engage a thighbone 3 and to move between the thighbone 3 and the kneecap 4 so as to detach at least part of the naturally present connections between the thighbone 3 and the kneecap 4.

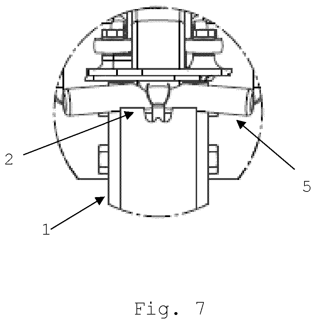

Finally, figure 7 depicts a front view of the chisel 1 that has been used in the above-mentioned embodiments. The forward 2 end of chisel 1 is indented.

Embodiments of the present invention can include every combination of features that are disclosed herein independently from each other. Although the invention has been discussed in the foregoing with reference to exemplary embodiments of the invention, the invention is not restricted to these particular embodiments which can be varied in many ways without departing from the invention. The discussed exemplary embodiments shall therefore not be used to construe the appended claims strictly in accordance therewith. On the contrary the embodiments are merely intended to explain the wording of the appended claims without intent to limit the claims to these exemplary embodiments. The scope of protection of the invention shall therefore be construed in accordance with the appended claims only, wherein a possible ambiguity in the wording of the claims shall be resolved using these exemplary embodiments.

Variations and modifications of the present invention will be obvious to those skilled in the art and it is intended to cover in the appended claims all such modifications and equivalents. The entire disclosures of all references, applications, patents, and publications cited above are hereby incorporated by reference. Unless specifically stated as being "essential" above, none of the various components or the interrelationship thereof are essential to the operation of the invention. Rather, desirable results can be achieved by substituting various components and/or reconfiguration of their relationships with one another.

## Claims

1. A method for removing a kneecap (4) from a thighbone (3) to which kneecap (4) at least a portion of kneemeat attaches, wherein a forward end (2) of a chisel (1) engages the thighbone (3) and is subsequently moved between the thighbone (3) and the kneecap (4) so as to detach at least part of the naturally present connections between the thighbone (3) and the kneecap (4), **characterized in that** during the execution of the method the thighbone (3) is clamped into a fixed position.

2. The method according to claim 1, **characterized in that** the motion of the chisel (1) between the thighbone (3) and the kneecap (4) is followed by moving the chisel (1) with the kneecap (4) away from the thighbone (3).

3. The method according to any one of claims 1 - 2, **characterized in that** at the kneecap facing end of the thighbone (3) a support plate (5) is provided to restrict motion of the thighbone (3) whilst the chisel (1) engages the thighbone (3).

4. The method according to claims 2 and 3, **characterized in that** as the chisel (1) moves with the kneecap (4) away from the thighbone (3), the chisel (1) slides along the support plate (5).

5. The method according to claim 1, wherein a drum bone (6) attaches to the thighbone (3), **characterized in that** a gripper (7) fixes the drum bone (6) with the thighbone (3) attached thereto in position.

6. The method according to claim 1 or 5, **characterized in that** a blade (9) or blades engage the meat in the vicinity of the kneecap (4) so as to release all connections of the kneecap (4) with the thighbone (3) and drum bone (6).

7. Kneecap harvester for removing a kneecap from a poultry thighbone, said harvester comprising a movable chisel (1) with a forward end (2) arranged to engage a thighbone (3) and to move between the thighbone (3) and the kneecap (4) so as to detach at least part of the naturally present connections between the thighbone (3) and the kneecap (4), **characterized in that** the harvester comprises a clamp or clamps (5) for fixing the thighbone (3) in position prior to the chisel (1) engaging the thighbone (3).

8. Kneecap harvester according to claim 7, **characterized in that** the chisel (1) is arranged to move the kneecap (4) away from the thighbone (3) after detaching at least part of the naturally present connections between the thighbone (3) and the kneecap (4).

9. Kneecap harvester according to claims 7 or 8, **characterized in that** the forward end (2) of the chisel (1) is indented.

10. Kneecap harvester according to any one of claims 7 - 9,
**characterized in that** the harvester is provided with a support plate (8) to restrict motion of the thighbone (3) whilst the chisel (1) engages the thighbone (3).

11. Kneecap harvester according to any one of claims 7 - 10,
**characterized in that** the harvester comprises a gripper (7) for securing a drum bone (6) which is attached to the thighbone (3) into a fixed position.

12. Kneecap harvester according to any one of claims 7 - 11,
**characterized in that** the harvester comprises a blade (9) or blades to engage the meat in the vicinity of the kneecap (4) so as to release all connections of the kneecap (4) with the thighbone (3) and/or drum bone (6).

## Amended claims

### Amended claims in accordance with Rule 137(2) EPC.

1. A method for removing a kneecap (4) from a thighbone (3) to which kneecap (4) at least a portion of kneemeat attaches, wherein a forward end (2) of a chisel (1) engages the thighbone (3) and is subsequently moved between the thighbone (3) and the kneecap (4) so as to detach the naturally present connections between the thighbone (3) and the kneecap (4), **characterized in that** during the execution of the method the thighbone (3) is clamped into a fixed position.

2. The method according to claim 1, **characterized in that** the motion of the chisel (1) between the thighbone (3) and the kneecap (4) is followed by moving the chisel (1) with the kneecap (4) away from the thighbone (3).

3. The method according to any one of claims 1 - 2, **characterized in that** at the kneecap facing end of the thighbone (3) a support plate (5) is provided to restrict motion of the thighbone (3) whilst the chisel (1) engages the thighbone (3).

4. The method according to claims 2 and 3, **characterized in that** as the chisel (1) moves with the kneecap (4) away from the thighbone (3), the chisel (1) slides along the support plate (5).

5. The method according to claim 1, wherein a drum bone (6) attaches to the thighbone (3), **characterized in that** a gripper (7) fixes the drum bone (6) with the thighbone (3) attached thereto in position.

6. The method according to claim 1 or 5, **characterized in that** a blade (9) or blades engage the meat in the vicinity of the kneecap (4) so as to release all connections of the kneecap (4) with the thighbone (3) and drum bone (6).

7. Kneecap harvester for removing a kneecap from a poultry thighbone, said harvester comprising a movable chisel (1) with a forward end (2) arranged to engage a thighbone (3) and to move between the thighbone (3) and the kneecap (4) so as to detach the naturally present connections between the thighbone (3) and the kneecap (4), **characterized in that** the harvester comprises a clamp or clamps (5) for fixing the thighbone (3) in position prior to the chisel (1) engaging the thighbone (3).

8. Kneecap harvester according to claim 7, **characterized in that** the chisel (1) is arranged to move the kneecap (4) away from the thighbone (3) after detaching at least part of the naturally present connections between the thighbone (3) and the kneecap (4).

9. Kneecap harvester according to claims 7 or 8, **characterized in that** the forward end (2) of the chisel (1) is indented.

10. Kneecap harvester according to any one of claims 7 - 9, **characterized in that** the harvester is provided with a support plate (8) to restrict motion of the thighbone (3) whilst the chisel (1) engages the thighbone (3).

11. Kneecap harvester according to any one of claims 7 - 10, **characterized in that** the harvester comprises a gripper (7) for securing a drum bone (6) which is attached to the thighbone (3) into a fixed position.

12. Kneecap harvester according to any one of claims 7 - 11, **characterized in that** the harvester comprises a blade (9) or blades to engage the meat in the vicinity of the kneecap (4) so as to release all connections of the kneecap (4) with the thighbone (3) and/or drum bone (6).
